# EUROPEAN PATENT APPLICATION

(11) **EP 4 324 332 A1**
(43) Date of publication of application: **21.02.2024**
(21) Application number: 21946007.8
(22) Date of filing: 16.06.2021
(51) Int. Cl.: A23J 3/00, A23J 3/16, A23L 29/256, A23L 11/40

(54) **SCRAMBLED-EGG-LIKE FOOD PRODUCT AND COOKED-EGG-LIKE FOOD PRODUCT**

(71) Applicant: Kewpie Corporation, Tokyo 150-0002 (JP); Kewpie EGG Corporation, Chofu-shi, Tokyo 182-0002 (JP)
(72) Inventor: KAJI, Satomi, Chofu-shi, Tokyo 182-0002 (JP); WATANABE, Masanori, Chofu-shi, Tokyo 182-0002 (JP)
(74) Representative: Winter, Brandl - Partnerschaft mbB
(86) International application number: PCT/JP2021/022914
(87) International publication number: WO 2022/264330

(57) **Abstract**

There is provided a scrambled-egg-like food product capable of reproducing a scrambled egg that has well-balanced softness and elasticity and has a smooth texture with a soft-boiled taste, and a cooked-egg-like food product using it. A scrambled-egg-like food product according to the present invention contains a gelled product and a fluid composition. The gelled product includes one or more plant-based milks selected from soy milk, oat milk, and almond milk, and alginic acid and/or a salt thereof. The fluid composition includes the plant-based milk.

## Description

### Technical Field

The present invention relates to a scrambled-egg-like food product that can be used as a substitute food for a scrambled egg, and a cooked-egg-like food product using the same.

### Background Art

A scrambled egg obtained by heating and coagulating a liquid egg while stirring has been favorably eaten because of their unique soft texture with elasticity. In particular, a soft-boiled scrambled egg has been one of the most popular cooked egg products because the soft-boiled portion makes it possible to enjoy a smoother and softer texture. Meanwhile, in recent years, there has been a request to enjoy foods like a cooked egg product that does not use eggs, due to concerns about health and growing preference for plant-based foods.

For example, Patent Literature 1 describes a scrambled-egg-like food product produced by baking a mixture of a soybean protein material and water.

### Citation List

### Patent Literature

Patent Literature 1: Japanese Patent Application Laid-open No. 2018-38318

### Summary of Invention

### Problem to be solved by the Invention

However, in the technology described in Patent Literature 1, it has been difficult to realize the well-balanced softness and elasticity and the smooth texture with a soft-boiled taste, which are unique to the scrambled egg.

In view of the circumstances as described above, it is an object of the present invention to provide a scrambled-egg-like food product capable of reproducing a scrambled egg that has well-balanced softness and elasticity and has a smooth texture with a soft-boiled taste, and a cooked-egg-like food product using the same.

### Means for solving the Problem

In order to achieve the above-mentioned object, the present inventors have extensively studied a scrambled-egg-like food product using plant-based foods. The present inventors have found that a soft-boiled scrambled-egg-like food product that has well-balanced softness and elasticity and a smooth texture with a soft-boiled taste can be obtained by using, as a substitute for a coagulated egg, a gelled product containing one or more plant-based milks selected from soy milk, oat milk, or almond milk, and alginic acid and/or a salt thereof, and combining the gelled product with a fluid composition containing the plant-based milk, and completed the present invention.

That is, the present invention is
(1) A scrambled-egg-like food product, including:
   a gelled product; and
   a fluid composition,
   the gelled product containing one or more plant-based milks selected from soy milk, oat milk, and almond milk, and alginic acid and/or a salt thereof,
   the fluid composition containing the plant-based milk,
(2) The scrambled-egg-like food product according to (1), wherein
   a content of the alginic acid and/or the salt thereof in the gelled product is 0.2% or more and 1.2% or less,
(3) The scrambled-egg-like food product according to (1) or (2), wherein
   the gelled product further contains dietary fiber,
(4) The scrambled-egg-like food product according to any one of (1) to (3), wherein
   the gelled product further contains edible fats and oils,
(5) The scrambled-egg-like food product according to any one of (1) to (4), wherein
   a content of a protein derived from the plant-based milk in the gelled product is 0.5% or more and 5.0% or less,
(6) The scrambled-egg-like food product according to any one of (1) to (5), wherein
   a content of the fluid composition is 10% or more and 50% or less,
(7) A cooked-egg-like food product, including
   the scrambled-egg-like food product according to any one of (1) to (6).

### Effects of the Invention

As described above, according to the present invention, it is possible to reproduce a scrambled egg that has well-balanced softness and elasticity and has a smooth texture with a soft-boiled taste.

### Mode(s) for Carrying Out the Invention

The present invention will be described below in detail. Note that in the present invention, "%" means "mass%".

### <Scrambled-egg-like food product>

A scrambled-egg-like food product according to the present invention is a substitute food for a scrambled egg using plant-based foods, and contains a gelled product and a fluid composition. In the scrambled-egg-like food product according to the present invention, the fluid composition is favorably located so as to surround the periphery of the gelled product. For example, the gelled product and the fluid composition are favorably deposited in the same container while being mixed together.

The scrambled egg is a food that is cooked by heating and coagulating an egg liquid while being stirred, and has a fluffy and soft texture while having elasticity unique to the coagulated egg. Further, by making the scrambled egg soft-boiled, it is possible to enjoy a softer, thicker, and smoother texture.

The scrambled-egg-like food product according to the present invention is capable or reproducing a scrambled egg that has well-balanced softness and elasticity and a thick and smooth texture in spite of mainly containing plant-based foods other than eggs.

The scrambled-egg-like food product according to the present invention favorably contains no egg or a small amount of egg, and more favorably contains no egg. The phrase "containing no egg" means that it does not contain a raw material derived from eggs of birds generally used for food, such as eggs of chicken, quail, and duck, and the phrase "containing a small amount of egg" means that it contains 5% or less, favorably 3% or less, and more favorably 1% or less of a raw material derived from the eggs of birds in the scrambled-egg-like food product.

Further, the scrambled-egg-like food product according to the present invention may be a refrigerated product that is stored and distributed at 0°C or more and 10°C or less, or a frozen product that is stored and distributed at -15°C or less.

### <Cooked-egg-like food product>

The scrambled-egg-like food product according to the present invention can be used as it is or as a topping for cooking or can be used as part of another cooked-egg-like food product, similarly to the scrambled egg.

The cooked-egg-like food product according to the present invention refers to a cooked product that includes the scrambled-egg-like food product according to the present invention, which is a food that is used as a substitute food for a cooked egg product. Examples of the cooked egg product include an omelet, an omelet rice, an oyako-don (chicken and egg rice bowl), a katsu-don (deep-fried pork cutlet rice bowl), a tenshin-han (crabmeat omelet on rice), an egg porridge, a kakitama-soba (egg-drop soba noodle soup), a kakitama-udon (egg-drop udon noodle soup), a sandwich, a hamburger, and a stir-fried dish.

The cooked-egg-like food product according to the present invention can be prepared by using the scrambled-egg-like food product according to the present invention as a substitute for a soft-boiled coagulated egg portion and by the same cooking method as that for general cooked egg products.

### <Gelled product>

The gelled product according to the present invention refers to a gelatinous product that contains a plant-based milk and alginic acid and/or a salt thereof. The gelled product according to the present invention corresponds to the coagulated egg portion in the scrambled egg.

The shape of the gelled product according to the present invention can be, for example, various shapes such as a film shape, a rod shape, a scale shape, a flat shape, a granular shape (soboro (fine scrambled egg)-shape), and is favorably a film shape, for example. As a result, the gelled product does not have a thick and hard texture, and can have a soft and fluffy texture while being sufficiently gelated. Further, by appropriately stacking and serving the gelled product having a film shape, the fluffy and delicious appearance having pleats on the surface like a real soft-boiled scrambled egg can be achieved.

The scrambled-egg-like food product according to the present invention favorably contains a plurality of gelled products in one container from the viewpoint of facilitating plating.

### <Plant-based milk in gelled product>

The plant-based milk according to the present invention refers to a cloudy emulsion formed by using a plant-based material as a raw material, and specifically refers to one or more plant-based milks selected from soy milk, oat milk, and almond milk. In the plant-based milk, the protein, the lipid, and the like in the plant-based material are emulsified, so that it is possible to obtain a rich taste similar to that of eggs and achieve a sensation similar to that of eggs, which leaves a flavor on the tongue. Therefore, by using the plant-based milk, it is possible to obtain a rich flavor and texture equivalent to or similar to those of the real scrambled egg in spite of using plant-based foods.

In the present invention, the soy milk refers to an emulsion formed by using a soybean as a raw material. That is, the soy milk according to the present invention includes "soy milk", "adjusted soy milk", and "soy milk drink" classified by Japanese Agricultural Standards (JAS), and a processed soybean product (processed soy milk product or the like) processed into an emulsion using a soybean as a raw material, which is not included in them.

In the present invention, the oat milk refers to an emulsion formed by using oats as a raw material.

In the present invention, the almond milk refers to an emulsion formed by using almond as a raw material.

In the present invention, the plant-based milk can be obtained by immersing a plant-based material that is a raw material in water, pulverizing and/or boiling it, and then separating it from solids. Alternatively, the plant-based milk may be a commercially available product that is generally distributed for use in beverages or cooking. In this case, the plant-based milk may include an emulsifier, a flavoring agent, a seasoning, fats and oils, and the like in addition to the plant-based material that is a main raw material, within a range that does not impair the effects of the present invention.

The plant-based milk according to the present invention is more favorably soy milk because it generally contains few additives and is widely distributed.

### <Content of plant-based milk in gelled product>

In the present invention, the content of the plant-based milk in the gelled product refers to the ratio of the mass of the plant-based milk when the mass of the entire gelled product is 100%.

In the present invention, the content of the plant-based milk is favorably 10% or more and more favorably 20% or more from the viewpoint of sufficiently obtaining the operation and effect of the plant-based milk. Further, the content of the plant-based milk is favorably 50% or less and more favorably 40% or less from the viewpoint of appropriately suppressing the content of the plant-based milk and sufficiently gelating it.

### <Content of protein derived from plant-based milk in gelled product>

In the present invention, the content of the protein derived from the plant-based milk in the gelled product refers to the ratio of the mass of the protein contained in the plant-based milk when the mass of the entire gelled product is 100%.

In the present invention, the content of the protein is favorably 0.1% or more and more favorably 1.0% or more from the viewpoint of making it sufficiently feel the taste unique to the protein. Further, the content of the protein is favorably 5.0% or less and more favorably 3.0% or less from the viewpoint of appropriately suppressing the content of the plant-based milk and sufficiently gelating it.

### <Alginic acid and/or salt thereof in gelled product>

The gelled product according to the present invention contains alginic acid and/or a salt thereof from the viewpoint of sufficiently gelating the raw material mixture of the gelled product containing the plant-based milk and realizing a texture equivalent to or similar to that of the coagulated egg portion of the real scrambled egg.

The alginic acid according to the present invention refers to a polysaccharide in which two types of uronic acid, mannuronic acid and glucuronic acid, are linearly polymerized.

Further, the salt of alginic acid according to the present invention refers to a salt in which the hydrogen of the carboxyl group in the alginic acid is substituted with an ion. The salt of alginic acid to be used in the present invention is favorably one or more selected from calcium alginate, sodium alginate, potassium alginate, magnesium alginate, and ammonium alginate, for example.

Further, the gelled product according to the present invention favorably contains calcium alginate from the viewpoint of gelating the raw material mixture of the gelled product in a small amount in a short time and imparting appropriate elasticity to the gelled product. The calcium alginate has high gel strength and can be produced by reacting a salt of alginic acid other than calcium alginate with calcium ions. That is, as will be described below in detail, by reacting the raw material mixture of the gelled product containing a salt of alginic acid other than calcium alginate with calcium ions, it is possible to gradually produce calcium alginate. As a result, it is possible to gradually gelate and mold the raw material mixture of the gelled product, similarly to an egg that is gradually gelated by heating. Therefore, it is possible to realize a soft texture without too high elasticity similar to that of eggs, and it becomes easier to from a gelled product having the above-mentioned film shape. As a result, it is possible to obtain a gelled product having a texture and appearance similar to those of the real scrambled egg.

### <Content of alginic acid and/or salt thereof>

In the present invention, the content of alginic acid and/or a salt thereof in a gelled product refers to the ratio of the mass of alginic acid and/or a salt thereof converted to the mass of alginic acid when the mass of the entire gelled product is 100%. Note that the mass of alginic acid and/or a salt thereof in the case where a plurality of types of alginic acid and/or salts thereof is used refers to the ratio of the total mass converted to the mass of alginic acid.

The content is favorably 0.2% or more and more favorably 0.3% or more from the viewpoint of imparting elasticity to the gelled product. Further, the content is favorably 1.2% or less and more favorably 0.8% or less from the viewpoint of imparting softness to the gelled product.

### <Dietary fiber in gelled product>

The gelled product according to the present invention favorably further contains dietary fiber from the viewpoint of suppressing unnatural jelly-like elasticity and obtaining a gelled product having a natural texture that is soft and easy to cut with teeth.

The dietary fiber is generally classified into insoluble dietary fiber and water-soluble dietary fiber, and any type of dietary fiber can be used in the present invention. Further, the dietary fiber may be supplied by adding a food containing dietary fiber to the raw material mixture of the gelled product.

Examples of the dietary fiber include pectin, glucomannan, an indigestible dextrin, gum arabic, an indigestible oligosaccharide, maltitol, cellulose, a hemicellulose, chitin, psyllium, and soybean fiber.

Examples of the food containing dietary fiber include a food containing dietary fiber of animal origin and a food containing dietary fiber of plant origin. A food containing dietary fiber of plant origin is favorable because of the compatibility with a plant-based milk. Examples thereof include juices, smoothies, and pastes using vegetables and fruits. Further, in the case where the plant-based milk contains dietary fiber, this dietary fiber in the plant-based milk can also be used as the dietary fiber according to the present invention.

The dietary fiber or the food containing dietary fiber may be used alone or two or more of them may be used in combination.

In particular, the gelled product according to the present invention more favorably contains dietary fiber derives from a soybean, oats, or almond contained in a plant-based milk because it is favorably compatible with a gelled product using a plant-based milk and a smooth texture can be easily obtained. For example, in the case where the gelled product contains soy milk as a plant-based milk, it is favorable that dietary fiber derived from a soybean (soybean fiber) is contained. This dietary fiber may be one contained in a plant-based milk or may be one added separately from the plant-based milk, or both of them may be contained.

The content of dietary fiber in the gelled product is favorably 0.1% or more, more favorably 0.5% or more, favorably 3% or less, and more favorably 2% or less from the viewpoint of obtaining a texture closer to that of the scrambled egg. Note that the content of dietary fiber in the gelled product refers to the ratio of the total mass of dietary fiber when the mass of the entire gelled product is 100%.

### <Edible fats and oils in gelled product>

The gelled product according to the present invention favorably further contains edible fats and oils from the viewpoint of obtaining a richness closer to that of the scrambled egg and an egg-like taste in the mouth. Note that the edible fats and oils according to the present invention do not include edible fats and oils added as raw materials of the plant-based milk. By adding edible fats and oils separately from the plant-based milk, it is possible to obtain a flavor and a richness similar to those obtained by stir-frying using fats and oils, like a real scrambled egg.

Examples of the edible fats and oils include animal and vegetable oils, refined oils thereof, and fats and oils obtained through chemical or enzymatic treatment. Examples of the animal and vegetable oils include rapeseed oil, corn oil, cottonseed oil, soybean oil, safflower oil, olive oil, safflower oil (benibana oil), palm oil, milk fat, beef tallow, lard, and egg yolk oil. Examples of the fats and oils obtained through chemical or enzymatic treatment include MCT (medium chain fatty acid triglyceride), diglyceride, hydrogenated oil, and enzyme-treated egg yolk oil. These edible fats and oils may be used alone or two or more of them may be used in combination.

In particular, the edible fats and oils favorably include rapeseed oil or soybean oil from the viewpoint of further enhancing the flavor of the gelled product using a plant-based milk such as soy milk.

The content of the edible fats and oils in the gelled product is favorably 3% or more and more favorably 5% or more from the viewpoint of obtaining the favorable richness and flavor described above. Further, the content of the edible fats and oils is favorably 30% or less and more favorably 20% or less from the viewpoint of suppressing an oily texture.

Note that the content of edible fats and oils in the gelled product refers to the ratio of the total mass of edible fats and oils when the mass of the entire gelled product is 100%.

### <Lipid in gelled product>

In the gelled product according to the present invention, the content of the lipid in the entire gelled product is favorably adjusted as follows from the viewpoint of reliably obtaining a favorable richness and flavor because the plant-based milk and the like also contain a lipid. In the present invention, the content of the lipid in the gelled product refers to the ratio of the total mass of lipids in the gelled product when the mass of the entire gelled product is 100%.

The content of the lipid in the gelled product is favorably 3% or more and more favorably 5% or more from the viewpoint of obtaining the favorable richness and flavor described above. Further, the content of the lipid is favorably 30% or less and more favorably 20% or less from the viewpoint of suppressing an oily texture.

### <Modified starch in gelled product>

The gelled product according to the present invention favorably further contains modified starch in order to obtain a fluffy texture unique to eggs. Note that the modified starch according to the present invention does not include modified starch added as raw materials of the plant-based milk.

Examples of the modified starch include hydroxypropyl starch, acetylated oxidized starch, sodium octenylsuccinate starch, acetic acid starch, oxidized starch, hydroxypropyl distarch phosphate, and phosphorated starch.

These modified starches may be used alone or two or more of them may be used in combination.

The content of modified starch in the gelled product is favorably 1% or more and more favorably 2% or more from the viewpoint of obtaining the favorable texture described above. Further, the content of the modified starch is favorably 10% or less and more favorably 6% or less from the viewpoint of suppressing a sticky texture. Note that the content of modified starch in the gelled product refers to the ratio of the total mass of modified starch when the mass of the entire gelled product is 100%.

### <Polysaccharide thickener in gelled product>

The gelled product according to the present invention may further contain a polysaccharide thickener in order to obtain a texture closer to that of the coagulated egg in cooperation with alginic acid and/or a salt thereof. Note that the polysaccharide thickener as used herein refers to a polysaccharide thickener other than alginic acid and/or a salt thereof and modified starch, and does not include a polysaccharide thickener added as raw materials of the plant-based milk.

Examples of the polysaccharide thickener used in the present invention include gum, pectin, curdlan, pullulan, mannan, and agar. Examples of the gum include xanthan gum, native gellan gum, deacylated gellan gum, carrageenan, locust bean gum, tara gum, guar gum, gum arabic, tamarind gum, and psyllium seed gum.

These polysaccharide thickeners may be used alone or two or more of them may be used in combination.

The content of the polysaccharide thickener in the gelled product is favorably 0.05% or more and more favorably 0.2% or more from the viewpoint of obtaining the favorable texture describe above. Further, the content is favorably 5% or less and more favorably 1% or less from the viewpoint of increasing the fluidity of the raw material mixture of the gelled product to improve the moldability and obtaining a soft texture similar to that of the coagulated egg. Note that the content of the polysaccharide thickener in the gelled product refers to the ratio of the total mass of polysaccharide thickeners when the mass of the entire gelled product is 100%.

### <Gelled product/other raw materials>

The scrambled-egg-like food product according to the present invention may contain raw materials other than the above as long as the effects of the present invention are not impaired.

Examples of such a raw material include
a colorant such as a paprika pigment, a safflower pigment, a carotene pigment, a capsicum pigment, an annatto pigment, a marigold pigment, and a turmeric pigment,
a saccharide such as granulated sugar, white sugar, brown sugar, fructose corn syrup, starches other than modified starch, dextrin, fructose, trehalose, glucose, lactose, oligosaccharide, and sugar ethanol (excluding the modified starch and polysaccharide thickener described above),
seasonings such as soy sauce, salt, pepper, and an amino acid,
a bacteriostatic agent such as glycine and sodium acetate,
a pH adjuster such as organic acid and organic acid salt,
a preservative,
an antioxidant, and
a flavoring agent.

### <Fluid composition>

The fluid composition according to the present invention refers to a liquid or pasty portion of a scrambled-egg-like food product having fluidity. The fluid composition makes it possible to more faithfully reproduce a smooth texture of a soft-boiled scrambled egg in which a thick soft-boiled portion has been formed around the coagulated egg. Further, the fluid composition makes it possible to suppress changes in the texture of the gelled product over time and maintain the moist and smooth texture of the scrambled-egg-like food product.

### <Content of fluid composition>

The content of the fluid composition according to the present invention refers to the ratio of the mass of the fluid composition to the mass of the entire scrambled-egg-like food product. The content of the fluid composition is favorably 10% or more and 50% or less and more favorably 20% or more and 40% or less. When the content of the fluid composition is 10% or more, it is possible to effectively obtain a soft-boiled taste of the scrambled egg. When the content of the fluid composition is 50% or less, it is possible to prevent the scrambled-egg-like food product from having a watery texture and obtain a naturally soft-boiled scrambled-egg-like food product.

Note that the content of the fluid composition is a value measured by the following method.

After putting a predetermined amount (100 g) of scrambled-egg-like food product on a 3 mm punch colander, the fluid composition adhered to the gelled product is washed away with clear water. After leaving to stand for one minute and draining, the mass of the remaining portion on the colander is measured as the mass of the gelled product. Meanwhile, the mass of the fluid composition is calculated by subtracting the mass of the gelled product from the predetermined amount (100 g). The ratio of the mass of the fluid composition to the predetermined amount that is the total amount of the scrambled-egg-like food product is calculated on the basis of the mass measured above. This ratio of the mass is used as the content of the fluid composition.

### <Plant-based milk in fluid composition>

The fluid composition according to the present invention contains the same type of plant-based milk as the plant-based milk contained in the gelled product. With such a fluid composition, a sense of unity with the gelled product can be felt, and a texture of a thick and naturally soft-boiled scrambled egg can be reproduced.

In the present invention, the content of the protein derived from the plant-based milk in the fluid composition is favorably 0.1% or more and more favorably 1.0% or more from the viewpoint of sufficiently obtaining a sense of unity with the gelled product. Further, the content of the protein is favorably 5.0% or less and more favorably 3.0% or less from the viewpoint of appropriately adjusting the content of the plant-based milk in the fluid composition. Note that the content of the protein can be calculated in the same manner as that for the content of the protein derived from the plant-based milk in the gelled product.

### <Alginic acid and/or salt thereof in fluid composition>

The fluid composition according to the present invention favorably contains alginic acid and/or a salt thereof from the viewpoint of enhancing a sense of unity with the gelled product containing alginic acid and/or a salt thereof and obtaining viscosity similar to that of the soft-boiled portion of the scrambled egg.

The fluid composition according to the present invention favorably contains a salt of alginic acid other than calcium alginate from the viewpoint of obtaining favorable viscosity while obtaining fluidity, and more favorably contains one or more selected from sodium alginate, potassium alginate, magnesium alginate, and ammonium alginate. For example, the fluid composition favorably contains sodium alginate.

Further, the fluid composition according to the present invention more favorably contains a salt of alginic acid contained in the raw material mixture of the gelled product from the viewpoint of enhancing a sense of unity with the gelled product.

The content of the alginic acid and/or salt thereof in the fluid composition is favorably 0.2% or more and more favorably 0.3% or more and favorably 1.2% or less and more favorably 0.8% or less in terms of alginic acid from the viewpoint of obtaining the operation and effect described above. Note that the content of the alginic acid and/or salt thereof can be calculated in the same manner as that for the content of the alginic acid and/or salt thereof in the gelled product.

### <Edible fats and oils in fluid composition>

The fluid composition according to the present invention favorably further contains edible fats and oils from the viewpoint of obtaining a richness closer to that of the scrambled egg and an egg-like taste in the mouth and making it more closer to the soft-boiled portion of the scrambled egg. The edible fats and oils may be the same as or different from the edible fats and oils used in the gelled product, but are favorably the same as the edible fats and oils used in the gelled product from the viewpoint of enhancing a sense of unity with the gelled product.

The content of the edible fats and oils in the fluid composition is 3% or more and more favorably 5% or more from the viewpoint of obtaining the operation and effect described above. Further, the content of the edible fats and oils is favorably 30% or less and more favorably 20% or less from the viewpoint of suppressing the oily texture. Note that the content of the edible fats and oils can be calculated in the same manner as that for the content of the edible fats and oils in the gelled product.

### <Lipid in fluid composition>

In the fluid composition according to the present invention, since the plant-based milk or milk also contains a lipid, similarly to the gelled product, the content of the lipid in the entire fluid composition is favorably adjusted as follows from the viewpoint of reliably obtaining a favorable richness and flavor and a soft-boiled taste. In the present invention, the content of the lipid in the fluid composition refers to the ratio of the total mass of lipids in the fluid composition when the mass of the entire fluid composition is 100%.

The content of the lipid in the fluid composition is specifically favorably 3% or more, more favorably 5% or more and favorably 30% or less and more favorably 20% or less.

### <Other raw materials in fluid composition>

The fluid composition according to the present invention may contain raw materials other than the above as long as the effects of the present invention are not impaired. Examples of such a raw material include,
a colorant such as a paprika pigment, a safflower pigment, a carotene pigment, a capsicum pigment, an annatto pigment, a marigold pigment, and a turmeric pigment,
dietary fiber such as pectin, glucomannan, an indigestible dextrin, gum arabic, an indigestible oligosaccharide, maltitol, cellulose, a hemicellulose, chitin, psyllium, and soybean fiber,
modified starch such as hydroxypropyl starch, acetylated oxidized starch, sodium octenylsuccinate starch, acetic acid starch, oxidized starch, hydroxypropyl distarch phosphate, and phosphorated starch,
a polysaccharide thickener such as gum, pectin, curdlan, pullulan, mannan, and agar,
a saccharide such as granulated sugar, white sugar, brown sugar, fructose corn syrup, starches other than modified starch, dextrin, fructose, trehalose, glucose, lactose, oligosaccharide, and sugar ethanol(excluding the polysaccharide thickener and dietary fiber),
seasonings such as soy sauce, salt, pepper, and an amino acid,
a bacteriostatic agent such as glycine and sodium acetate,
a pH adjuster such as organic acid and organic acid salt,
a preservative,
an antioxidant, and
a flavoring agent.

### <Other raw materials in scrambled-egg-like food product>

The scrambled-egg-like food product according to the present invention may appropriately contain ingredients such as meat and vegetables in addition to the gelled product and the fluid composition as long as the effects of the present invention are not impaired.

### <Method of producing scrambled-egg-like food product>

In an embodiment, a method of producing the scrambled-egg-like food product according to the present invention includes a step of preparing a raw material mixture of a gelled product, a step of gelating the raw material mixture to prepare a gelled product, a step of preparing a fluid composition, and a step of combining the gelled product and the fluid composition. Further, the production method may further include, as necessary, a step of freezing the combined gelled product and fluid composition.

### <Step of preparing raw material mixture of gelled product>

In this step, a plant-based milk and alginic acid and/or a salt thereof are mixed to prepare a raw material mixture of a gelled product. As described above, the raw material mixture of the gelled product may contain a raw material other than the plant-based milk and the alginic acid and/or salt thereof. Mixing of the raw material can be performed using, for example, a mixer or a stirrer. Note that the mixing in this step is favorably performed such that the raw material mixture is homogenous from the viewpoint of homogenizing the gelation property of the raw material mixture.

Further, in this production method, since the water content hardly changes during the gelling process, the content of each raw material in the raw material mixture in this step can be set so as to be the same as the content of each component of the gelled product after production.

### <Step of preparing gelled product>

In this step, a gelled product obtained by gelating the raw material mixture is prepared.

In this step, for example, the raw material mixture containing an alginate such as sodium alginate is added to a calcium solution containing calcium ions. As a result, the alginate and the calcium ions react to produce calcium alginate with high gelling ability, and the raw material mixture gradually is gelated as this reaction progresses. The gelled product gelated in the calcium solution is taken out from the calcium solution using a colander or the like. By such a method, it is possible to reproduce the gelling process similar to that of eggs, which gradually gelated by heating, and prepare a gelled product having the appearance and texture similar to those of the coagulated egg.

### <Step of preparing fluid composition>

In this step, a fluid composition is prepared by mixing a raw material containing a plant-based milk. As described above, the fluid composition may contain a raw material other than the plant-based milk. The mixing of the raw material can be performed using, for example, a mixer or a stirrer. Note that the mixing in this step is favorably performed such that the fluid composition is homogenous.

### <Combining step>

In this step, the prepared gelled product and fluid composition are combined. As a result, it is possible to prepare a scrambled-egg-like food product containing the fluid composition that surrounds the periphery of the gelled product.

In this step, for example, by filling a container with the gelled product and the fluid composition, these can be combined. The container is favorably sealable, and the material, shape, and the like of the container are not particularly limited. Examples of the container include a hard container such as those formed of plastic, and a soft container such as a pouch formed of polyethylene and a pouch formed of polypropylene.

When filling the container, for example, the gelled product and the fluid composition may mixed, and the contained may be filled therewith. This makes it easier to fill, even in the case where there is a plurality of gelled products, the container with the gelled products and the fluid composition. Alternatively, the fluid composition may be added after filling the container with the gelled product, or the gelled product may be added after filling the container with the fluid composition.

Further, treatment such as sterilization may be performed on the combined gelled product and fluid composition as necessary.

### <Freezing step>

In this step, the combined gelled product and fluid composition are frozen. As a result, a scrambled-egg-like food product that is a frozen product is obtained.

The freezing in this step is performed by, for example, freezing the container containing the gelled product and the fluid composition in a freezer or freezing room at -15°C to -40°C. The time required for freezing is not particularly limited. The scrambled-egg-like food product after freezing is preserved in, for example, a freezer or freezing room at -30°C or less.

### <Operation and effect of present invention>

The scrambled-egg-like food product according to the present invention contains a gelled product containing a plant-based milk and alginic acid and/or a salt thereof. As a result, it is possible to obtain a fluffy and soft texture while maintaining moderate elasticity with alginic acid and/or a salt thereof, in addition to a deep richness and taste on the tongue with a plant-based milk. Therefore, it is possible to obtain a gelled product similar to the coagulated egg of the scrambled egg with the gelled product having the composition described above.

Further, the scrambled-egg-like food product according to the present invention contains a fluid composition containing the same type of plant-based milk as that in the gelled product. As a result, the fluid composition harmoniously integrates with the gelled product, and it is possible to obtain a smooth soft-boiled taste similar to that of the freshly-made soft-boiled scrambled egg. Further, by containing the fluid composition, it is possible to maintain the moist and soft texture of the gelled product even after distribution and preservation.

As described above, according to the present invention, it is possible to reproduce a scrambled egg that has well-balanced softness and elasticity and has a smooth texture with a soft-boiled taste by using a plant-based food.

The present invention will be specifically described below on the basis of Examples and Comparative Examples. Note that the present invention is not limited to these.

### (Examples)

In Test Examples of the present invention, samples of scrambled-egg-like food products having different compositions were prepared and the texture of each sample was evaluated.

Note that in each table, the "dietary fiber (added)" described in the column of the "raw materials of gelled product" is dietary fiber added separately from other raw materials. The " dietary fiber in gelled product" represents the content of all dietary fiber in the gelled product, which includes dietary fiber contained in the raw materials such as a plant-based milk.

Similarly, in each table, the "lipid in gelled product" represents the content of all lipids in the gelled product derived from the raw materials such as a plant-based milk and edible fats and oils.

### <Test Example 1: Examination on content of alginic acid and/or salt thereof in gelled product>

### [Example 1]

First, the raw materials having the composition shown in Table 1 were stirred and mixed to prepare a raw material mixture of a gelled product.

As the plant-based milk, an unadjusted soy milk (having the soybean solid content of 8% or more, the protein content of 4.2%, and the lipid content of 3.7%) was used. The content of the protein derived from the soy milk in the raw material mixture of the gelled product was 1.3%. As the alginic acid and/or salt thereof, sodium alginate was used. As the edible fats and oils, soybean oil was used. As the polysaccharide thickener, xanthan gum was used. As the colorant, a gardenia pigment was used.

Subsequently, the raw material mixture was poured little by little into a 3% aqueous solution of calcium lactate. This causes sodium alginate and calcium ions in the raw material mixture to react to prepare a gelled product.

Further, raw materials having the same content as that of the raw material mixture of the gelled product are stirred and mixed to prepare a fluid composition containing an unadjusted soy milk. Note that gelling treatment using an aqueous solution of calcium lactate was not performed on the fluid composition.

The gelled product and the fluid composition were then combined to prepare a sample according to an Example 1. The ratio of the mass (content) of the fluid composition to the mass of the entire sample was 30%.

### [Examples 2 to 7]

Samples according to Examples 2 to 7 were prepared in the same manner as that in the Example 1 except that the content of sodium alginate in the raw material mixture of the gelled product was set to the amount shown in Table 1. Note that the fluid composition had the same composition as that of the raw material mixture of the gelled product of each sample.

### [Comparative Example 1]

A scrambled-egg-like food product was prepared by causing the raw material mixture of the gelled product to contain no sodium alginate and mixing a polysaccharide thickener in the amount of 0.8%. Gellan gum was used as the polysaccharide thickener. Further, as a method of producing a gelled product, the slurry containing gellan gum was heated to 90°C or more, and then, the slurry was spread into a thin-film shape in a container and cooled to prepare a gel having a thin-film shape. The fluid composition had the same composition as that of the gelled product.

**[Table 1]**

| | | Example 1 | Example 2 | Example 3 | Example 4 | Example 5 | Example 6 | Example 7 | Comparative Example 1 |
|---|---|---|---|---|---|---|---|---|---|
| Raw materials of gelled product | Plant-based milk | Unadjusted soy milk | | | | | | | |
| | Plant-based milk(%) | 30.0 | 30.0 | 30.0 | 30.0 | 30.0 | 30.0 | 300 | 30.0 |
| | Protein derived from plant-based milk(%) | 1.3 | 1.3 | 1.3 | 1.3 | 1.3 | 1.3 | 1.3 | 1.3 |
| | Sodium alginate(%) | 0.25 | 0.38 | 0.50 | 0.75 | 1.0 | 1.3 | 15 | 0.0 |
| | Dietary fiber (added)(%) | 0.0 | 0.0 | 0.0 | 0.0 | 0.0 | 0.0 | 0.0 | 0.0 |
| | Edible fats and oils(%) | 18.9 | 18.9 | 18.9 | 18.9 | 18.9 | 18.9 | 18.9 | 18.9 |
| | Polysaccharide thickener(%) | 0.5 | 0.5 | 0.5 | 0.5 | 0.5 | 0.5 | 05 | 0.8 |
| | Trehalose(%) | 6.0 | 6.0 | 6.0 | 6.0 | 6.0 | 6.0 | 6.0 | 6.0 |
| | Modified starch(%) | 0.0 | 0.0 | 0.0 | 0.0 | 0.0 | 0.0 | 0.0 | 0.0 |
| | Colorant(%) | 0.3 | 0.3 | 0.3 | 0.3 | 0.3 | 0.3 | 03 | 0.3 |
| | Pure water | Remainder | Remainder | Remainder | Remainder | Remainder | Remainder | Remainder | Remainder |
| | Total gelled product(%) | 100.0 | 100.0 | 100.0 | 100.0 | 100.0 | 100.0 | 100.0 | 100.0 |
| Dietary fiber in gelled product(%) | | 0.1 | 0.1 | 0.1 | 0.1 | 0.1 | 0.1 | 0.1 | 0.1 |
| Lipid in gelled product(%) | | 20.0 | 20.0 | 20.0 | 20.0 | 20.0 | 20.0 | 200 | 20.0 |
| Content of fluid composition | | 30% | 30% | 30% | 30% | 30% | 30% | 30% | 30% |
| Texture | | B | A | A | A | B | C | C | D |

### [Evaluation of texture]

Three panelists ate part of each sample, and each panelist evaluated the texture from 0 to 3 points on the basis of the following criteria. The texture of each sample was then evaluated from A to D on the basis of the average score of the evaluation points of the three panelists. The results are shown in Table 1.

The evaluation criteria are shown below.

### (Evaluation criteria of each panelist)

3 points: It has very well-balanced softness and elasticity, sufficiently has a smooth texture with a soft-boiled taste, and is equivalent to the soft-boiled scrambled egg, which is very favorable.
2 points: It has well-balanced softness and elasticity, has a smooth texture with a soft-boiled taste, and is quite similar to the soft-boiled scrambled egg, which is favorable.
1 point: It has at least one of the balance between softness and elasticity or a smooth texture with a soft-boiled taste, which is slightly inferior, but is close to the soft-boiled scrambled egg, which is not a problem.
0 point: It does not have at least one of the balance between softness and elasticity or a smooth texture with a soft-boiled taste and is completely different from the soft-boiled scrambled egg, which is not favorable.

### (Evaluation criteria of texture)

A: The average score of the evaluation points of all panelists is 3 points
B: The average score of the evaluation points of all panelists is 2 points or more and less than 3 points
C: The average score of the evaluation points of all panelists is 1 point or more and less than 2 points
D: The average score of the evaluation points of all panelists is less than 1 point

### [Evaluation results]

The Examples 1 to 7 were all evaluated C or more, and had well-balanced softness and elasticity and smooth texture with a soft-boiled taste.

The samples according to the Examples 1 to 7 tended to be softer as the content of sodium alginate decreases and harder and more elastic as the content of sodium alginate increases. The samples according to the Examples 1 to 5 in which the content of sodium alginate is 0.25% or more and 1.0% or less had well-balanced softness and elasticity (hardness) and had sufficient smoothness, which was favorable. In particular, the samples according to the Examples 2 to 4 in which the content of sodium alginate is 0.38% or more and 0.75% or less had a texture equivalent to that of the real soft-boiled scrambled egg, which was very favorable.

Meanwhile, the Comparative Example 1 gelated without alginic acid and/or a salt thereof was sticky, had a texture completely different from that of the soft-boiled scrambled egg, and evaluated as D. The appearance thereof was also unfavorable because it was in the form of lumps completely different from that of the soft-boiled scrambled egg.

### <Test Example 2: Examination on plant-based milk of gelled product>

Subsequently, the type of plant-based milk in the gelled product was changed or a material other than the plant-based milk was used to examine the plant-based milk in the gelled product.

### [Example 8]

A sample according to an Example 8 was prepared in the same manner as that in the Example 1 except that the soy milk in the raw material mixture of the gelled product according to the Example 1 was changed to oat milk (having the protein content of 0.7% and the lipid content of 1.9%) such that the composition was as shown in Table 2. The fluid composition had the same composition as that of the raw material mixture of the gelled product.

### [Example 9]

A sample according to an Example 9 was prepared in the same manner as that in the Example 1 except that the soy milk in the raw material mixture of the gelled product according to the Example 1 was changed to almond milk (having the protein content of 2.7% and the lipid content of 5.4%) such that the composition was as shown in Table 2. Note that the fluid composition had the same composition as that of the raw material mixture of the gelled product.

### [Examples 10 and 11]

Samples according to Examples 10 and 11 were prepared in the same manner as that in the Example 1 except that the soy milk in the raw material mixture of the gelled product according to the Example 1 was changed to a processed soy milk product (having the protein content of 6.9% and the lipid content of 8.2%) containing soybean fiber such that the composition was as shown in Table 2. Note that the "dietary fiber" in the raw material was dietary fiber (soybean fiber) contained in the processed soy milk product.

### [Comparative Example 2]

A sample according to a Comparative Example 2 was prepared in the same manner as that in the Example 1 except that the soy milk in the raw material mixture of the gelled product according to the Example 1 was changed to milk (having the protein content of 3.4% and the lipid content of 3.9%) such that the composition was as shown in Table 2. Note that the fluid composition had the same composition as that of the raw material mixture of the gelled product.

### [Comparative Example 3]

A sample according to a Comparative Example 3 was prepared in the same manner as that in the Example 1 except that the plant-based milk was not added to the raw material mixture of the gelled product such that the composition was as shown in Table 2. Note that the fluid composition had the same composition as that of the raw material mixture of the gelled product.

### [Comparative Example 4]

As a plant-based milk, a non-emulsified soybean protein powder was mixed with water to prepare a dispersion containing a soybean protein powder in the amount of 1.0%. Then, a sample according to a Comparative Example 4 was prepared in the same manner as that in the Example 1 except that the soy milk in the raw material mixture of the gelled product according to the Example 1 was changed to the dispersion described above such that the composition was as shown in Table 2. Note that the fluid composition had the same composition as that of the raw material mixture of the gelled product.

**(Table 2)**

| | | Example 8 | Example 9 | Example 10 | Example 11 | Comparative Example 2 | Comparative Example 3 | Comparative Example 4 |
|---|---|---|---|---|---|---|---|---|
| Raw materials of gelled product | Plant-based milk | Oat milk | Almond milk | Processed soy milk product | Processed soy milk product | Milk | None | Soybean protein |
| | Plant-based milk(%) | 30.0 | 30.0 | 35.0 | 25.0 | 30.0 | 0.0 | 30.0 |
| | Protein derived from plant-based milk(%) | 0.2 | 0.8 | 2.4 | 1.7 | 1.0 | 0.0 | 1.0 |
| | Sodium alginate(%) | 0.7 | 0.7 | 0.7 | 0.7 | 0.7 | 0.7 | 0.7 |
| | Dietary fiber (added)(%) | 0.0 | 0.0 | 0.0 | 0.0 | 0.0 | 0.0 | 0.0 |
| | Edible fats and oils(%) | 19.4 | 18.4 | 11.1 | 22.0 | 18.8 | 20.0 | 200 |
| | Polysaccharide thickener(%) | 0.5 | 0.5 | 0.5 | 0.5 | 0.5 | 0.5 | 0.5 |
| | Trehalose(%) | 6.0 | 6.0 | 6.0 | 6.0 | 6.0 | 6.0 | 6.0 |
| | Modified starch(%) | 4.5 | 4.5 | 4.5 | 4.5 | 4.5 | 4.5 | 4.5 |
| | Colorant(%) | 0.3 | 0.3 | 0.3 | 0.3 | 0.3 | 0.3 | 0.3 |
| | Pure water | Remainder | Remainder | Remainder | Remainder | Remainder | Remainder | Remainder |
| | Total gelled product(%) | 100.0 | 100.0 | 100.0 | 100.0 | 100.0 | 100.0 | 100.0 |
| Dietary fiber in gelled product(%) | | 0.2 | 0.3 | 1.4 | 1.0 | 0.0 | 0.0 | 0.0 |
| Lipid in gelled product(%) | | 20.0 | 20.0 | 14.0 | 24.0 | 20.0 | 20.0 | 20.0 |
| Content of fluid composition | | 30% | 30% | 30% | 30% | 30% | 30% | 30% |
| Texture | | A | A | A | A | D | D | D |

### [Evaluation of texture and results thereof]

The samples according to the Examples 8 to 11 and the Comparative Examples 2 to 4 were evaluated in the same manner as that in the Test Example 1. The results are shown in Table 2.

The Examples 8 to 11 containing soy milk, oat milk, or almond milk all had a very favorable texture equivalent to that of the real soft-boiled scrambled egg, and were evaluated as A.

Meanwhile, the sense of unity with the gelled product and the fluid composition was not felt from all the samples according to the Comparative Examples 2 to 4 that do not use the plant-based milk, and they had an unnatural texture different from that of the soft-boiled scrambled egg and were evaluated as D. Further, a flavor unique to milk, which is different from that of the scrambled egg, was felt from the Comparative Example 2, which gave a sense of discomfort. A deep richness similar to that of the scrambled egg was not felt from the Comparative Examples 3 and 4, which was also unfavorable.

### <Test Example 3: Examination on fluid composition>

Subsequently, the content of the fluid composition was changed or the composition of the fluid composition was changed to examine the fluid composition.

### [Examples 12 to 16]

As a plant-based milk, the same processed soy milk product as that in the Example 10 was prepared. Then, using this processed soy milk product, the raw materials shown in Table 3 were stirred and mixed to prepare a raw material mixture of a gelled product. This raw material mixture of the gelled product was galated in the same way as that in the Example 1 to prepare a gelled product.

Further, raw materials having the same composition as that of the raw material mixture of the gelled product were stirred and mixed to prepare a fluid composition containing a processed soy milk product.

The fluid composition and the gelled product having the content shown in Table 3 were then combined to prepare samples according to Examples 12 to 16.

### [Comparative Example 5]

A sample that does not contain a fluid composition and includes only a gelled product having the same composition as that in the Example 12 was prepared as a Comparative Example 5.

### [Comparative Example 6]

A gelled product having the same composition as that in the Example 12 and a fluid composition that does not contain a plant-based milk were prepared. The composition of this fluid composition was the same as that of the raw material mixture of the gelled product except for the plant-based milk, and the remainder was adjusted with water.

The fluid composition and the gelled product were combined in the amounts of 30% and 70%, respectively, to prepare a sample according to a Comparative Example 6.

**(Table 3)**

| | | Example 12 | Example 13 | Example 14 | Example 15 | Example 16 | Comparative Example 5 | Comparative Example 6 |
|---|---|---|---|---|---|---|---|---|
| Raw materials of gelled product | Plant-based milk | Processed soy milk product | | | | | | |
| | Plant-based milk(%) | 30.0 | 30.0 | 30.0 | 30.0 | 30.0 | 30.0 | 30.0 |
| | Protein derived from plant-based milk(%) | 2.1 | 2.1 | 2.1 | 2.1 | 2.1 | 2.1 | 2.1 |
| | Sodium alginate(%) | 0.7 | 0.7 | 0.7 | 0.7 | 0.7 | 0.7 | 0.7 |
| | Dietary fiber (added)(%) | 0.0 | 0.0 | 0.0 | 0.0 | 0.0 | 0.0 | 0.0 |
| | Edible fats and oils(%) | 17.5 | 17.5 | 17.5 | 17.5 | 17.5 | 17.5 | 17.5 |
| | Polysaccharide thickener(%) | 0.5 | 0.5 | 0.5 | 0.5 | 0.5 | 0.5 | 0.5 |
| | Trehalose(%) | 6.0 | 6.0 | 6.0 | 6.0 | 6.0 | 6.0 | 6.0 |
| | Modified starch(%) | 4.5 | 4.5 | 4.5 | 4.5 | 4.5 | 4.5 | 4.5 |
| | Colorant(%) | 0.3 | 0.3 | 0.3 | 0.3 | 0.3 | 0.3 | 0.3 |
| | Pure water | Remainder | Remainder | Remainder | Remainder | Remainder | Remainder | Remainder |
| | Total gelled product(%) | 100.0 | 100.0 | 100.0 | 100.0 | 100.0 | 100.0 | 100.0 |
| Dietary fiber in gelled product(%) | | 1.2 | 1.2 | 1.2 | 1.2 | 1.2 | 1.2 | 1.2 |
| Lipid in gelled product(%) | | 20.0 | 20.0 | 20.0 | 20.0 | 20.0 | 20.0 | 20.0 |
| Content of fluid composition | | 10% | 20% | 30% | 40% | 50% | 0% | 30% |
| Plant-based milk in fluid composition(%) | | 30.0 | 30.0 | 30.0 | 30.0 | 30.0 | - | 0.0 |
| Texture | | B | A | A | A | B | D | D |

### [Evaluation of texture and results thereof]

The samples according to the Examples 12 to 16 and the Comparative Examples 5 and 6 were evaluated in the same manner as that in the Test Example 1. The results are shown in Table 3.

The samples according to the Examples 12 to 16 that use the fluid composition containing a plant-based milk all had a texture equivalent to or quite similar to that of the soft-boiled scrambled egg, and were evaluated as A or B.

In particular, the Examples 13 to 15 having the content of the fluid composition of 20% or more and 40% or less were particularly notable for their smooth texture with soft-boiled taste, and were evaluated as A.

Meanwhile, the Comparative Example 5 that does not contain a fluid composition was evaluated as D because it was dry and crumbly, lacked smoothness, and a soft-boiled taste was not felt at all therefrom.

Further, the sample according to the Comparative Example 6 that uses a fluid composition containing no plant-based milk did not have the sense of unity with the gelled product and the fluid composition, had a rough texture, and was evaluated as D.

### <Test Example 4: Examination on other raw materials of gelled product>

Subsequently, raw materials such as edible fats and oils, a polysaccharide thickener, and dietary fiber were examined.

### [Example 17]

A sample according to an Example 17 was prepared in the same manner as that in the Example 1 except that edible fats and oils and a colorant were not used such that the composition was as shown in Table 4. Note that the fluid composition had the same composition as that of the raw material mixture of the gelled product.

### [Example 18]

A sample according to an Example 18 was prepared in the same manner as that in the Example 1 except that edible fats and oils, a polysaccharide thickener, trehalose, and a colorant were not used such that the composition was as shown in Table 4. Note that the fluid composition had the same composition as that of the raw material mixture of the gelled product.

### [Example 19]

A sample according to an Example 19 was prepared in the same manner as that in the Example 1 except that psyllium was used as dietary fiber added separately from other raw materials and edible fats and oils, a polysaccharide thickener, trehalose, and a colorant were not used such that the composition was as shown in Table 4. Note that the fluid composition had the same composition as that of the raw material mixture of the gelled product.

### [Example 20]

A sample according to an Example 20 was prepared in the same manner as that in the Example 1 except that soybean fiber was used as dietary fiber added separately from other raw materials such that the composition was as shown in Table 4. Note that the fluid composition had the same composition as that of the raw material mixture of the gelled product.

**(Table 4)**

| | | Example 17 | Example 18 | Example 19 | Example 20 |
|---|---|---|---|---|---|
| Raw materials of gelled product | Plant-based milk | Unadjusted soy milk | | | |
| | Plant-based milk(%) | 40.0 | 40.0 | 40.0 | 30.0 |
| | Protein derived from plant-based milk(%) | 1.7 | 1.7 | 1.7 | 1.3 |
| | Sodium alginate(%) | 1.0 | 1.0 | 1.0 | 0.7 |
| | Dietary fiber (added)(%) | 0.0 | 0.0 | 1.5 | 1.2 |
| | Edible fats and oils(%) | 0.0 | 0.0 | 0.0 | 18.9 |
| | Polysaccharide thickener(%) | 0.5 | 0.0 | 0.0 | 0.5 |
| | Trehalose(%) | 6.0 | 0.0 | 0.0 | 6.0 |
| | Modified starch(%) | 0.0 | 4.5 | 0.0 | 4.5 |
| | Colorant(%) | 0.0 | 0.0 | 0.0 | 0.3 |
| | Pure water | Remainder | Remainder | Remainder | Remainder |
| | Total gelled product(%) | 100.0 | 100.0 | 100.0 | 100.0 |
| Dietary fiber in gelled product(%) | | 0.1 | 0.1 | 1.6 | 1.3 |
| Lipid in gelled product(%) | | 0.8 | 0.8 | 0.8 | 20.0 |
| Content of fluid composition | | 30% | 30% | 30% | 30% |
| Texture | | C | B | B | A |

### [Evaluation of texture and results thereof]

The samples according to the Examples 17 to 20 were evaluated in the same manner as that in the Test Example 1. The results are shown in Table 4.

The samples according to the Examples 17 to 20 all had a texture equivalent to or similar to that of the soft-boiled scrambled egg.

The sample according to the Example 17 that does not use edible fats and oils and a colorant slightly lacked smoothness, but it was within a reasonable range.

The sample according to the Example 18 that does not use edible fats and oils, a polysaccharide thickener, trehalose, and a colorant has slightly improved smoothness as compared with the Example 17, probably due to the addition of modified starch.

The sample according to the Example 19 that uses psyllium as dietary fiber did not have unnatural elasticity similar to that of jelly, and had moderate softness and a favorable texture.

The sample according to the Example 20 that uses soybean fiber as dietary fiber had did not have unnatural elasticity, was soft, and had a smooth texture, and a sense of unity with the gelled product and the fluid composition was felt therefrom, which was very favorable.

### <Test Example 5: Examination on lipid>

The content of the lipid in the gelled product was changed to examine the lipid.

### [Examples 21 to 24]

Samples according to Examples 21 to 24 were prepared in the same manner as that in the Example 1 except that the same processed soy milk product as that in the Example 10 was used and the amount of edible fats and oils was changed to adjust the content of the lipid to be shown in Table 5. Note that the fluid composition in each sample had the same composition as that of the raw material mixture of the gelled product in each sample.

**(Table 5)**

| | | Example 21 | Example 22 | Example 23 | Example 24 |
|---|---|---|---|---|---|
| Raw materials of gelled product | Plant-based milk | Processed soy milk product | | | |
| | Plant-based milk(%) | 30.0 | 30.0 | 30.0 | 30.0 |
| | Protein derived from plant-based milk(%) | 2.1 | 2.1 | 2.1 | 2.1 |
| | Sodium alginate(%) | 0.7 | 0.7 | 0.7 | 0.7 |
| | Dietary fiber (added)(%) | 0.0 | 0.0 | 0.0 | 0.0 |
| | Edible fats and oils(%) | 0.5 | 4.5 | 12.5 | 27.5 |
| | Polysaccharide thickener(%) | 0.5 | 0.5 | 0.5 | 0.5 |
| | Trehalose(%) | 6.0 | 6.0 | 6.0 | 6.0 |
| | Modified starch(%) | 4.5 | 4.5 | 4.5 | 4.5 |
| | Colorant(%) | 0.3 | 0.3 | 0.3 | 0.3 |
| | Pure water | Remainder | Remainder | Remainder | Remainder |
| | Total gelled product(%) | 100.0 | 100.0 | 100.0 | 100.0 |
| Dietary fiber in gelled product(%) | | 1.2 | 1.2 | 1.2 | 1.2 |
| Lipid in gelled product(%) | | 3.0 | 7.0 | 15.0 | 30.0 |
| Content of fluid composition | | 30% | 30% | 30% | 30% |
| Texture | | B | A | A | A |

### [Evaluation of texture and results thereof]

The samples according to the Examples 21 to 24 were evaluated in the same manner as that in the Test Example 1. The results are shown in Table 5.

The samples according to the Examples 21 to 24 in which the content of the lipid is 3.0% or more and 30.0% or less all had a favorable texture equivalent to or quite similar to that of the real soft-boiled scrambled egg, and were evaluated as A or B.

In particular, the samples according to the Examples 22 to 24 in which the content of the lipid is 7.0% or more and 30% or less all had a rich and smooth texture similar to that of the real soft-boiled scrambled egg, and were evaluated as A.

## Claims

1. A scrambled-egg-like food product, comprising:
a gelled product; and
a fluid composition,
the gelled product containing one or more plant-based milks selected from soy milk, oat milk, and almond milk and alginic acid and/or a salt thereof,
the fluid composition containing the plant-based milk.

2. The scrambled-egg-like food product according to claim 1, wherein
a content of the alginic acid and/or the salt thereof in the gelled product is 0.2% or more and 1.2% or less.

3. The scrambled-egg-like food product according to claim 1 or 2, wherein
the gelled product further contains dietary fiber.

4. The scrambled-egg-like food product according to any one of claims 1 to 3, wherein
the gelled product further contains edible fats and oils.

5. The scrambled-egg-like food product according to any one of claims 1 to 4, wherein
a content of a protein derived from the plant-based milk in the gelled product is 0.5% or more and 5.0% or less.

6. The scrambled-egg-like food product according to any one of claims 1 to 5, wherein
a content of the fluid composition is 10% or more and 50% or less.

7. A cooked-egg-like food product, comprising:
the scrambled-egg-like food product according to any one of claims 1 to 6.

## Amended claims

### Amended claims under Art. 19.1 PCT

1. (currently amended) A scrambled-egg-like food product, comprising:
a gelled product; and
a fluid composition,
the gelled product containing one or more plant-based milks selected from soy milk, oat milk, and almond milk and calcium alginate and being gelated by the calcium alginate,
the fluid composition containing the plant-based milk.

2. (currently amended) The scrambled-egg-like food product according to claim 1, wherein
a content of the calcium alginate in the gelled product is 0.2% or more and 1.2% or less.

3. The scrambled-egg-like food product according to claim 1 or 2, wherein
the gelled product further contains dietary fiber.

4. The scrambled-egg-like food product according to any one of claims 1 to 3, wherein
the gelled product further contains edible fats and oils.

5. The scrambled-egg-like food product according to any one of claims 1 to 4, wherein
a content of a protein derived from the plant-based milk in the gelled product is 0.5% or more and 5.0% or less.

6. The scrambled-egg-like food product according to any one of claims 1 to 5, wherein
a content of the fluid composition is 10% or more and 50% or less.

7. A cooked-egg-like food product, comprising:
the scrambled-egg-like food product according to any one of claims 1 to 6.
